# EUROPÄISCHE PATENTSCHRIFT

(11) **EP 0 825 093 B1**
(45) Veröffentlichungstag und Bekanntmachung des Hinweises auf die Patenterteilung: **16.07.2003**
(21) Anmeldenummer: 97113485.3
(22) Anmeldetag: 05.08.1997
(51) Int. Cl.: B62D 5/083, B62D 5/06

(54) **Servoventil**
Servovalve
Servovalve

(30) Priorität: 13.08.1996 DE 19632622
(43) Veröffentlichungstag der Anmeldung: 25.02.1998
(73) Patentinhaber: DaimlerChrysler AG, 70567 Stuttgart (DE)
(72) Erfinder: Köhler, Karl-Hans, 73249 Wernau (DE); Fasse, Ernst, 73614 Schorndorf (DE); Knecht, Andreas, 72119 Ammerbuch (DE); Niethammer, Bernd, 72622 Nürtingen (DE); Stehli, Thomas, 72631 Aichtal (DE)

(56) Entgegenhaltungen:
- DE-C- 4 330 159
- DE-C- 4 418 119
- DE-C- 4 437 168
- GB-A- 2 032 361

## Beschreibung

Die Erfindung betrifft ein Servoventil für fluidische, insbesondere hydraulische Servolenkungen mit
- einer einen Drehschieber sowie eine dazu koaxiale Schieberbuchse umfassenden Drehschieberanordnung, welche zumindest eine Drosselstrecke mit zwischen Drehschieber und Schieberbuchse ausgebildeter Eingangs- und Ausgangsdrossel sowie dazwischen abzweigendem Motoranschluß aufweist und durch Drehverstellung von Drehschieber und Schieberbuchse relativ zueinander steuerbar ist, und
- einem eingangsseitig der Drehschieberanordnung angeordneten, normal geschlossenen, durch die Drehverstellung von Drehschieber und Schieberbuchse gegenüber einer Normallage auslösbaren, sitzgesteuerten Absperrventil, welches durch Axialverschiebung einer auf dem Drehschieber drehfest und axial verschiebbar angeordneten Schiebemuffe, deren Axialverschiebung durch die Drehverstellung von Drehschieber und Schieberbuchse relativ zueinander gesteuert wird, auslösbar ist.

Heutige Kraftfahrzeuge sind oftmals mit Servolenkungen ausgerüstet, welche eine Drehschieberanordnung der eingangs angegebenen Art aufweisen. Dabei wird die Drehschieberanordnung in Abhängigkeit von den zwischen Lenkhandrad und Fahrzeuglenkrädern übertragenen Kräften verstellt. In der Regel ist dazu eine das Lenkhandrad mit den Fahrzeuglenkrädern koppelnde Lenksäule mit zwei relativ zueinander begrenzt verdrehbaren Lenkwellenteilen ausgebildet, deren gegen Rückstellkraft erfolgende Relativdrehung die Drehschieberanordnung steuert, indem das eine Wellenteil drehfest mit dem Drehschieber und das andere Wellenteil drehfest mit der Schieberbuchse verbunden ist.

Die Drehschieberanordnung besitzt zwei parallele Drosselstrekken mit jeweils einer Eingangs- und einer Ausgangsdrossel sowie einem Motoranschluß. Bei Verstellung der Drehschieberanordnung werden die beiden Drosselstrecken gegensinnig zueinander verstellt, d.h. in der einen Drosselstrecke werden der Drosselwiderstand der Eingangsdrossel erhöht und der Drosselwiderstand der Ausgangsdrossel vermindert, während in der anderen Drosselstrecke eine Verminderung des Drosselwiderstandes der Eingangsdrossel und eine Erhöhung des Drosselwiderstandes der Ausgangsdrossel erfolgen. Damit tritt zwischen den Motoranschlüssen der beiden Drosselstrecken eine steuerbare Druckdifferenz in der einen oder anderen Richtung auf, wenn die Eingangsseiten der Drosselstrecken an eine Druckquelle und die Ausgangsseiten der Drosselstrecke mit einem relativ drucklosen Reservoir od.dgl. verbunden sind. Diese Druckdifferenz wird auf die beiden Seiten eines in zwei Richtungen antreibbaren Servomotors geleitet, der das Lenkmanöver des Fahrers unterstützt.

Bei normaler Geradeausfahrt, d.h. wenn zwischen den Fahrzeuglenkrädern und dem Lenkhandrad keinerlei Lenkkräfte übertragen werden müssen, hat die vorgenannte Druckdifferenz den Wert Null, so daß der Servomotor keinerlei Servokraft erzeugt. Gleichwohl werden die beiden Drosselstrecken ständig vom Druckmedium durchströmt, d.h. das System arbeitet mit einer sogenannten offenen Mitte. Dementsprechend muß für die Druckquelle des Servosystems ständig Leistung bereitgestellt werden.

Zwar sind Servoventile mit sogenannter geschlossener Mitte grundsätzlich bekannt. Jedoch ist bislang deren Steuerverhalten noch nicht zufriedenstellend, bzw. es ist ein vergleichsweise hoher konstruktiver Aufwand notwendig.

Aus der DE 44 37 168 C1 ist ein Servoventil der eingangs angegebenen Art bekannt. Durch das dort vorgesehene Absperrventil, welches in Normallage von Drehschieber und Schieberbuchse geschlossen ist, wird trotz der offenen Mitte der Drehschieberanordnung erreicht, dass die Drosselstrecke bzw. Drosselstrekken der Drehschieberanordnung in der vorgenannten Normallage von Drehschieber und Schieberbuchse nicht vom Druckmedium durchströmt werden und dementsprechend die Druckquelle des Servosystems keine Leistung benötigt.

Gemäß der DE 44 37 168 C1 ist der Ventilkörper des Absperrventiles in einer Zentralbohrung des Drehschiebers untergebracht. Der mit dem Ventilkörper zusammenwirkende Ventilsitz ist an einer Zentralbohrung eines zwischen Drehschieber und Schieberbuchse angeordneten Torsionsrohrs ausgebildet, durch das Drehschieber und Schieberbuchse drehelastisch miteinander gekoppelt sind.

Aus der DE 44 18 119 C1 ist eine weitere Servoventilanordnung bekannt, bei der eine Drehschieberanordnung mit offener Mitte mit einem in Normallage der Drehschieberanordnung geschlossenem Absperrventil kombiniert ist. Dabei wird das Absperrventil durch Radial- oder Axialbewegungen gesteuert, die ein mit einer Zahnstange zusammenwirkendes Ritzel unter Einwirkung übertragener Drehmomente ausführen kann.

In der DE 43 30 169 C1 wird ein Servoventil beschrieben, welches wiederum im wesentlichen aus einer Drehschieberanordnung mit offener Mitte sowie einem dazu in Reihe angeordneten Absperrventil besteht. Hier ist das Absperrventil als elektromagnetisches Schaltventil ausgebildet, welches geöffnet wird, sobald ein Sensor eine Axialverschiebung einer Schiebemuffe registriert, deren Axialbewegung durch Relativdrehungen von Drehschieber und Schieberbuchse der Drehschieberanordnung gesteuert wird.

Die GB 2 032 361 A bezieht sich auf eine normal geschlossene Servoventilanordnung. Diese Anordnung besitzt zwei parallele Drosselstrecken, deren Ausgangsdrosseln nach Art einer Drehschieberanordnung ausgebildet sind und durch Relativdrehung zwischen einem Drehschieber und einer Schieberbuchse gesteuert werden. Als Eingangsdrosseln sind federbelastete Sitzventile vorgesehen, deren Federbelastung von den zwischen einer Eingangs- und einer Ausgangswelle übertragenen Drehmomenten abhängt, wobei mögliche Relativdrehungen zwischen Eingangs- und Ausgangswelle zu einer Zwangsöffnung der federbelasteten Sitzventile führen. Da die federbelasteten Ventile von dem Druck einer eingangsseitig angeordneten Druckquelle in Öffnungsrichtung beaufschlagt werden und sich der an den Ventilkörpern wirksame Druck stark ändert, sobald das Ventil öffnet und von einem Fluidstrom mit größerer Strömungsgeschwindigkeit durchsetzt wird, ist das Steuerverhalten problematisch.

Aufgabe der Erfindung ist es, für ein Servoventil der eingangs angegebenen Art eine vorteilhafte Konstruktion zu schaffen.

Diese Aufgabe wird erfindungsgemäß dadurch gelöst, dass das Absperrventil in einer zur Längsachse des Drehschiebers parallelen Bohrung eines Gehäuseteiles des Servoventils untergebracht und mit einem Ventilkörper mit stößelartigem Fortsatz versehen ist, der zur Auslösung des Absperrventils mit einer auf der Schiebemuffe axial drehgelagerten Ringscheibe zusammenwirkt.

Die Erfindung beruht auf dem allgemeinen Gedanken, ein prinzipiell herkömmliches, nach Art einer Drehschieberanordnung ausgebildetes Servoventil und ein eingangsseitiges Absperrventil miteinander zu kombinieren, dessen Verschlußkörper durch Drehverstellung von Teilen der Drehschieberanordnung relativ zueinander gesteuert wird und innerhalb eines stationären Teiles des Ventilgehäuses angeordnet ist.

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung sowie vorteilhafte Merkmale beschrieben werden.

Dabei zeigt
- Fig. 1: einen Axialschnitt des erfindungsgemäßen Servoventiles,
- Fig. 2: eine schaltplanartige Darstellung wesentlicher Teile einer Servolenkung mit erfindungsgemäßem Servoventil und
- Fig. 3: ein Schnittbild entsprechend der Schnittlinie III-III in Fig. 1, wobei das Bild A eine Normallage und das Bild B eine gegenüber der Normallage verstellte Lage von Schiebemuffe und Nutenträger darstellt.

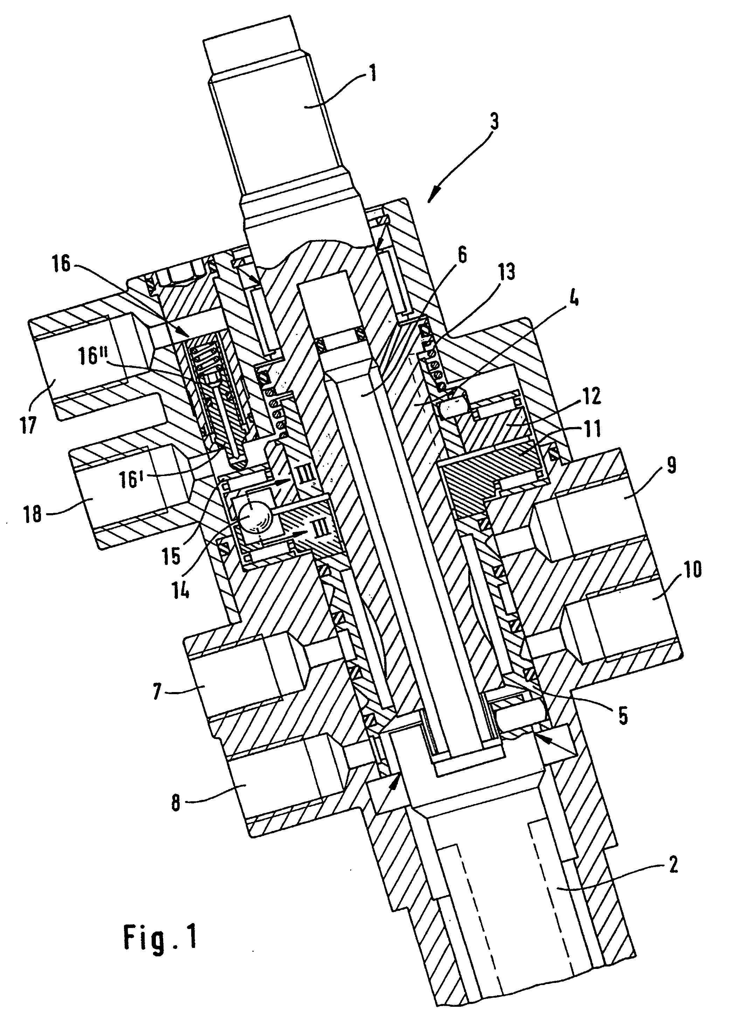

Gemäß Fig. 1 ist axial zwischen einer Eingangswelle 1, die mit einem nicht dargestellten Lenkhandrad eines Kraftfahrzeuges verbunden sein kann, und einem Ritzel 2, welches mit einer nicht näher dargestellten Zahnstange kämmt und über diese Zahnstange mit Fahrzeuglenkrädern zu deren Lenkverstellung gekoppelt sein kann, ein Servoventil 3 angeordnet, welches in grundsätzlich bekannter Weise nach Art einer Drehschieberanordnung ausgebildet ist und einen mit der Eingangswelle 1 fest bzw. drehfest verbundenen Drehschieber 4 sowie eine mit dem Ritzel 2 drehfest verbundene Schieberbuchse 5 aufweist. Der Drehschieber 4 sowie die dazu koaxiale Schieberbuchse 5 sind miteinander über einen Drehstab 6 drehelastisch verbunden, derart, daß der Drehschieber sowie die Schieberbuchse 5 relativ zueinander einen Drehhub entsprechend der Größe des zwischen Eingangswelle 1 und Ritzel 2 wirksamen Drehmomentes ausführen können. Durch nicht näher dargestellte Anschläge kann das Maß des Drehhubes begrenzt sein.

Die den Drehschieber 4 sowie die Schieberbuchse 5 umfassende Drehschieberanordnung besitzt einen Eingangsanschluß 7, einen mit einem nicht dargestellten, relativ drucklosen Hydraulikreservoir kommunizierenden Ausgangsanschluß 8 sowie zwei Motoranschlüsse 9 und 10, die mit den beiden Seiten eines nicht dargestellten hydraulischen Servomotors verbunden sein können, welcher nach Art eines doppeltwirkenden hydraulischen Kolben-Zylinder-Aggregates ausgebildet sein kann.

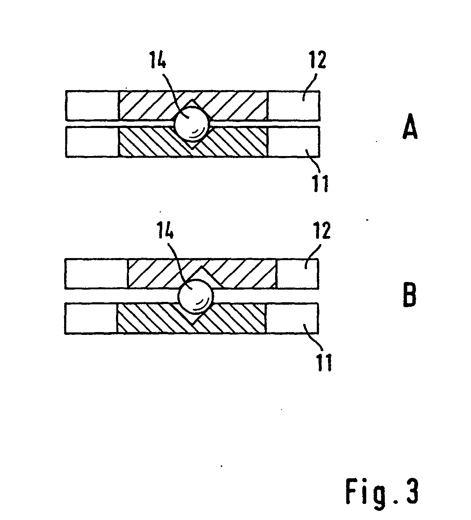

Mit der Drehschieberbuchse 5 ist ein scheibenförmiger Nutenträger 11 fest verbunden, welcher auf seiner in Fig. 1 unteren Stirnseite mittels eines Axiallagers auf einem Gehäuseteil des Servoventiles 3 drehbar abgestützt ist. Auf dem Drehschieber 4 ist eine Schiebemuffe 12 drehfest und axial verschiebbar angeordnet; für die relativ zum Drehschieber 4 drehfeste Anordnung der Schiebemuffe 12 können der Drehschieber 4 sowie die Schiebemuffe 12 aneinander angepaßte unrunde Außen- bzw. Innenprofile besitzen. Mittels einer Schraubendruckfeder 13, welche den Drehschieber 4 koaxial umfaßt und zwischen einem drehschieberseitigen Flansch sowie einer Ringstufe der Schiebemuffe 12 axial eingespannt ist, wird die Schiebemuffe 12 gegen den Nutenträger 11 gespannt. Zwischen dem Nutenträger 11 und einem ringscheibenförmigen Teil der Schiebemuffe 12 sind in nutenförmigen Ausnehmungen, welche sich zu käfigartigen Kammern ergänzen, Kugeln 14 angeordnet. Wie aus Fig. 3 besser erkennbar wird, besitzen die nutenförmigen Ausnehmungen bei V-ähnliches Profil, welches sich jeweils radial zur Längsachse des Drehschiebers 4 bzw. der Schieberbuchse 5 erstreckt. Die Tiefe der Ausnehmungen ist so bemessen, daß die einander zugewandten Stirnseiten des Nutenträgers 11 sowie der Schiebemuffe 12 auch bei kraftschlüssiger Auflage der Kugeln 14 auf dem Nutenträger 11 sowie der Schiebemuffe 12 einen mehr oder weniger großen axialen Abstand voneinander haben, welcher zunimmt, wenn der Nutenträger 11 relativ zur Schiebemuffe 12 aus der im Bild A der Fig. 3 dargestellten Mittellage gemäß dem Bild B der Fig. 3 verdreht wird. Dies ist gleichbedeutend damit, daß die Schiebemuffe 12 bei der genannten Relativdrehung einen Axialhub gegen die Kraft der Schraubendruckfeder 13 ausführt.

Auf der vom Nutenträger 11 abgewandten Stirnseite des ringscheibenförmigen Teiles der Schiebmuffe 12 ist eine Ringscheibe 15 axial drehgelagert, welche mit einem stößelartigen Fortsatz des Ventilkörpers eines sitzgesteuerten Absperrventiles 16 zusammenwirkt, das in einer zur Längsachse des Drehschiebers 4 parallelen Bohrung eines Gehäuseteiles des Servoventiles 3 untergebracht ist und einen Druckanschluß 17 sowie einen Anschluß 18 miteinander verbindet bzw. voneinander abtrennt. Der Anschluß 17 kann mit einem nicht dargestellten Druckspeicher verbunden sein, welcher bei Bedarf nachgeladen wird, so daß ein im wesentlichen konstanter Betriebsdruck aufrechterhalten wird. Der Anschluß 18 kann über eine in Fig. 1 nicht dargestellte Leitung mit dem Eingangsschluß 7 verbunden sein.

Der Ventilkörper 16' des Absperrventiles 16 kann, wie in Fig. 1 dargestellt ist, in einer napfförmigen Hülse 16" geführt und gegenüber dem Druck auf der Eingangsseite dieses Ventiles 16 abgeschirmt sein. Durch Bohrungen im Ventilkörper 16' ist sichergestellt, daß innerhalb der Hülse 16" immer gleicher Druck wie auf der Ausgangsseite des Ventiles 16 vorliegt und das Schließverhalten des Ventiles 16 von den jeweils wirksamen fluidischen Drücken praktisch nicht beeinflußt wird.

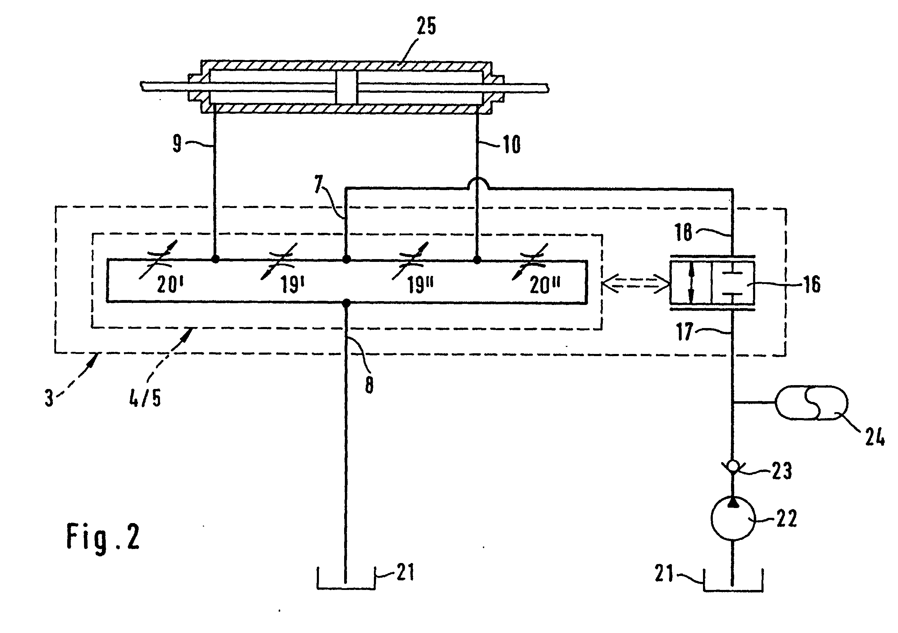

Zur Erläuterung der Funktion des in Fig. 1 dargestellten Servoventiles wird nachfolgend auch auf die Fig. 2 Bezug genommen.

Der Drehschieber 4 sowie die Schieberbuchse 5 bilden zwei parallele Drosselstrecken mit je einer Eingangsdrossel 19' bzw. 19" sowie je einer Ausgangsdrossel 20' bzw. 20". Bei Drehverstellung von Drehschieber 4 und Schieberbuchse 5 verändern sich die Drosselwiderstände der Drosselstrecken gegenläufig zueinander, derart, daß sich der Drosselwiderstand der einen Eingangsdrossel, z.B. 19', vergrößert, während sich der Drosselwiderstand der jeweils anderen Eingangsdrossel, z.B. 19", verkleinert; gleichzeitig verändern sich die Drosselwiderstände der Ausgangsdrosseln 20' und 20" entgegengesetzt zur Veränderung der Drosselwiderstände der jeweils zugeordneten Eingangsdrosseln 19' bzw. 19"; dies wird durch antiparallele Pfeile an den Drosseln 19' bis 20" symbolisiert.

In der Mittellage von Drehschieber 4 und Schieberbuchse 5 besitzen die Drosseln 19' bis 20" etwa gleiche Drosselwiderstände. Das Absperrventil 16 ist in Mittellage des Drehschiebers 4 sowie der Schieberbuchse 5 geschlossen. Dazu sind die nutenförmigen Ausnehmungen am Nutenträger 11 sowie der Schiebermuffe 12 - vgl. die Fig. 1 und 3 - so angeordnet, daß sie in Mittellage von Drehschieber 4 und Schieberbuchse 5 eine Lage entsprechend dem Bild A der Fig. 3 einnehmen.

Die Anschlüsse 7 und 18 sind miteinander durch eine Leitung verbunden. Der Ausgangsanschluß 8 führt zu einem relativ drucklosen Hydraulikreservoir 21, welches auch mit der Saugseite einer Pumpe 22 verbunden ist, die bedarfsabhängig arbeitet und über ein Rückschlagventil 23 druckseitig mit einem hydraulischen Druckspeicher 24 sowie dem Druckanschluß 17 des Servoventiles 3 verbunden ist. Durch die Pumpe 22 wird der Druckspeicher 24 bei Bedarf nachgeladen.

Die Motoranschlüsse 9 und 10 des Servoventiles 3 sind an die beiden Seiten eines Servomotors 25 angeschlossen, der im dargestellten Beispiel als doppeltwirkendes Kolben-Zylinder-Aggregat ausgebildet ist.

Wenn nun der Drehschieber 4 und die Schieberbuchse 5 relativ zueinander mehr oder weniger weit verstellt werden, wird das Absperrventil 16 zwangsläufig geöffnet, gleichzeitig werden beispielsweise die Drosselwiderstände der Drosseln 20' und 19" erhöht, während die Drosselwiderstände der Drosseln 19' und 20" abnehmen. Damit bilden die Drosselstrecken 19',20' einerseits und 19",20' andererseits ungleiche Strömungswege für das aus dem Druckspeicher 24 über das geöffnete Absperrventil 16 dem Eingangsanschluß 7 zugeleitete Druckmedium, welches nach Durchströmung der vorgenannten Drosselstrecken über den Ausgangsschluß 8 zum Reservoir 21 abströmt. Aufgrund der ungleichen Strömungswege tritt zwischen den Motoranschlüssen 9 und 10 eine Druckdifferenz auf, mit der Folge, daß der Servomotor 25 eine entsprechende Stellkraft erzeugt, welche bei der vorangehend angegebenen Verstellung der Drosseln 19' bis 20" in Fig. 2 den Kolben des Servomotors 25 nach rechts zu schieben sucht.

Sobald der Drehschieber 4 und die Schieberbuchse wieder ihre Mittellage einnehmen, schließt das Absperrventil 16, mit der Folge, daß aus dem Druckspeicher 24 kein weiteres Druckmedium zum Eingangsanschluß 7 strömen kann. Die Motoranschlüsse 9 und 10 kommmunizieren über die relativ offenen Ausgangsdrosseln 20' und 20" mit dem Reservoir 21 bzw. miteinander, so daß der Servomotor 25 passiv verstellbar bleibt.

Für die Relativverstellung von Drehschieber 4 und Schieberbuchse 5 muß im Beispiel der Fig. 1 zwischen Eingangswelle 1 und Ritzel 2 ein Mindestdrehmoment wirksam sein, welches durch die Druckspannung der Schraubendruckfeder 13 sowie die Steilheit der Flanken der nutenförmigen Ausnehmungen bestimmt wird, die die Kugeln 14 aufnehmen. Außerdem wird das Mindestdrehmoment auch durch die Schließkraft des Absperrventiles 16 bzw. seiner Ventilfeder beeinflußt. Das genannte Mindestdrehmoment bildet eine sogenannte Grundlast, die überwunden werden muß, bevor eine Servounterstützung des jeweiligen Lenkmanövers wirksam wird. Durch diese Grundlast wird ein "Mittengefühl" - "on center fee" - vermittelt.

Der in Mittellage von Drehschieber 4 und Schieberbuchse 5 relativ zueinander unverspannte Drehstab 6 bestimmt (zusammen mit der Schraubendruckfeder 13 und der Steilheit der Flanken der vorgenannten Nuten) den notwendigen Drehmomentanstieg für eine zunehmende Verstellung von Drehschieber 4 und Schieberbuchse 5 relativ zueinander.

Abweichend von der dargestellten Ausführungsform können anstelle der Kugeln 14 in Fig. 1 auch Rollen oder sonstige Wälzkörper angeordnet sein, deren Drehachsen radial zur Längsachse des Drehschiebers 4 ausgerichtet sind.

Gegebenenfalls kann die Ringscheibe 15 in ähnlicher Weise wie mit dem Ventilkörper des Absperrventiles 16 mit nicht dargestellten Kolben zusammenwirken, die von einem modulierbaren Druck gegen die Ringscheibe 15 gespannt werden. Auf diese Weise kann das Drehmoment, welches für eine Verstellung von Drehschieber 4 und Schieberbuchse 5 relativ zueinander wirksam sein muß, verändert werden, z.B. in Abhängigkeit von vorzugebenden Parametern, wie z.B. der Fahrgeschwindigkeit des Fahrzeuges.

## Patentansprüche

1. Servoventil (3) für fluidische, insbesondere hydraulische Servolenkungen, mit
- einer einen Drehschieber (4) sowie eine dazu koaxiale Schieberbuchse (5) umfassenden Drehschieberanordnung, welche zumindest eine Drosselstrecke mit zwischen Drehschieber und Schieberbuchse ausgebildeter Eingangs- und Ausgangsdrossel (19',19";20',20") sowie dazwischen abzweigendem Motoranschluß (9,10) aufweist und durch Drehverstellung von Drehschieber und Schieberbuchse relativ zueinander steuerbar ist, und
- einem eingangsseitig der Drehschieberanordnung (4,5) angeordneten, normal geschlossenen, durch die Drehverstellung von Drehschieber (4) und Schieberbuchse (5) gegenüber einer Normallage auslösbaren, sitzgesteuerten Absperrventil (16), welches durch Axialverschiebung einer auf dem Drehschieber (4) drehfest und axial verschiebbar angeordneten Schiebemuffe (12), deren Axialverschiebung durch die Drehverstellung von Drehschieber (4) und Schieberbuchse (5) relativ zueinander gesteuert wird, auslösbar ist,
**dadurch gekennzeichnet,**
**dass** das Absperrventil (16) in einer zur Längsachse des Drehschiebers (4) parallelen Bohrung eines Gehäuseteiles des Servoventils (3) untergebracht und mit einem Ventilkörper (16') mit stößelartigem Fortsatz versehen ist, der zur Auslösung des Absperrventils mit einer auf der Schiebemuffe (12) axial drehgelagerten Ringscheibe (15) zusammenwirkt.

2. Servoventil nach Anspruch 1,
**dadurch gekennzeichnet,**
**dass** der Ventilkörper (16') in einer napfförmigen Hülse (16") geführt und gegenüber dem Druck auf der Eingangsseite des Absperrventils (16) abgeschirmt ist, und dass innerhalb der Hülse (16") mittels Bohrungen im Ventilkörper (16') gleicher Druck wie auf der Ausgangsseite des Absperrventils sichergestellt ist.

3. Servoventil nach Anspruch 1 oder 2,
**dadurch gekennzeichnet,**
**dass** das Absperrventil (16) zwischen einem gehäuseseitigen Druckanschluß (17) sowie einem weiteren gehäuseseitigen Anschluss (18) angeordnet und der weitere Anschluss (18) über eine Leitung mit einem Eingangsanschluß (7) der Drehschieberanordnung (4,5) verbindbar ist.

4. Servoventil nach einem der Ansprüche 1 bis 3,
**dadurch gekennzeichnet,**
**dass** zwischen einem axial fest am Gehäuse abgestützen sowie mit der Schieberbuchse (5) drehfest gekoppelten Teil (11) und der axial auf dem Drehschieber (4) verschiebbaren sowie von einer Stellkraft (13) axial gegen das vorgenannte Teil (11) gespannten Schiebemuffe (12) Wälzkörper oder Kugeln (14) angeordnet sind, welche auf den einander zugewandten Stirnseiten des vorgenannten Teils (11) sowie der Schiebemuffe (12) in nutenförmigen Aufnahmen mit radial zur Achse von Drehschieber (4) und Schieberbuchse (5) ausgerichteten, jeweils ein V-Profil bildenden Flanken aufgenommen sind.

5. Servoventil nach Anspruch 4,
**dadurch gekennzeichnet,**
**dass** die Schiebemuffe (12) mittels einer Schraubendruckfeder (13), die den Drehschieber (4) koaxial umfasst, gegen das axial feste Teil (11) gespannt ist.

## Claims

1. Servo valve (3) for a fluid-operated, in particular hydraulic, power steering systems, having
- a rotary slide valve assembly comprising a rotary slide valve (4) and a valve sleeve (5) disposed coaxially therewith, which has at least one throttle path with inlet and outlet throttles (19', 19"; 20', 20") disposed between rotary slide valve and valve sleeve and a motor connection (9, 10) branching off in between, and which can be controlled by adjusting the rotational position of rotary slide valve and valve sleeve relative to one another, and
- located on the inlet side of the rotary slide valve assembly (4, 5), a seat-controlled normally closed shut-off valve (16), which can be actuated by adjusting the rotational position of rotary slide valve (4) and valve sleeve (5) relative to a normal position, which can be initiated by axially displacing a sliding collar (12) which is rotationally fixed on and axially slidable on the rotary slide valve (4), the axial displacement of which is controlled by adjusting the relative rotational position of rotary slide valve (4) and valve sleeve (5),
**characterised in that**
the shut-off valve (16) is mounted in a bore of a housing part of the servo valve (3) disposed parallel with the longitudinal axis of the rotary slide valve (4) and is provided with a valve body (16') having a rod-type projection which co-operates with an annular disc (15) axially rotatably mounted on the sliding collar (12) in order to actuate the shut-off valve.

2. Servo valve as claimed in claim 1,
**characterised in that**
the valve body (16') is guided in a cup-shaped sleeve (16") and is screened from the pressure on the inlet side of the shut-off valve (16), bores in the valve body (16') ensuring that the pressure inside the sleeve (16") is the same as that on the outlet side of the shut-off valve.

3. Servo valve as claimed in claim 1 or 2,
**characterised in that**
the shut-off valve (16) is disposed between a housing-side pressurised connection (17) and another housing-side connection (18) and the other connection (18) can be connected via a line to an input end (7) of the rotary slide valve assembly (4, 5).

4. Servo valve as claimed in one of claims 1 to 3,
**characterised in that**,
provided between a part (11) that is supported in an axially fixed arrangement on the housing and coupled with the valve sleeve (5), so as to be rotationally fixed, and a sliding collar (12) axially mounted in a sliding arrangement on the rotary slide valve (4) and biassed towards said part (11) by an actuating force (13), are bearing elements or ball bearings (14) which are received in grove-shaped recesses in the mutually facing end faces of said part (11) and the sliding collar (12), respectively having sides forming a V-shaped contour disposed radially with respect to the axis of the rotary slide valve (4) and valve sleeve (5).

5. Servo valve as claimed in claim 4,
**characterised in that**
the sliding collar (12) is biassed against the axially fixed part (11) by means of a helical compression spring (13) coaxially enclosing the rotary slide valve (4).

## Revendications

1. Servovalve (3) pour des directions assistées fluidiques, en particulier hydrauliques, comportant
- un agencement de tiroir rotatif comprenant un tiroir rotatif (4) ainsi qu'une douille de tiroir (5) coaxiale à celui-ci, agencement qui comprend au moins un trajet d'étranglement avec un étranglement d'entrée et avec un étranglement de sortie (19', 19" ; 20', 20") agencés entre le tiroir rotatif et la douille de tiroir ainsi qu'un raccord de moteur (9, 10) en dérivation entre ceux-ci, qui sont susceptibles d'être commandés l'un par rapport à l'autre par déplacement en rotation du tiroir rotatif et de la douille de tiroir, et
- une valve d'arrêt (16) à siège commandé, agencée du côté entrée de l'agencement de tiroir rotatif (4, 5), normalement fermée, susceptible d'être déclenchée par le déplacement en rotation du tiroir rotatif (4) et de la douille de tiroir (5) par rapport à une position normale, laquelle valve d'arrêt est susceptible d'être déclenchée par translation axiale d'un manchon de tiroir agencé solidairement en rotation et avec faculté de translation axiale sur le tiroir rotatif (4), manchon dont la translation axiale est commandée par le déplacement en rotation du tiroir rotatif (4) et de la douille de tiroir (5) l'un par rapport à l'autre,
**caractérisée en ce que**
la valve d'arrêt (16) est logée dans un perçage, parallèle à l'axe longitudinal du tiroir rotatif (4), d'une partie de carter de la servovalve (3) et est pourvue d'un corps de valve (16') comportant un prolongement en forme de poussoir qui coopère avec un disque annulaire (15) monté en rotation axiale sur le manchon de tiroir (12) pour déclencher la valve d'arrêt.

2. Servovalve selon la revendication 1, **caractérisée en ce que** le corps de valve (16') est guidé dans une virole (16") en forme de godet et protégé à l'encontre de la pression sur le côté entrée de la valve d'arrêt (16), et **en ce qu'**une pression identique à celle sur le côté entrée de la valve d'arrêt est assurée à l'intérieur de la virole (16") au moyen de perçages dans le corps de valve (16').

3. Servovalve selon l'une ou l'autre des revendications 1 et 2, **caractérisé en ce que** la valve d'arrêt (16) est agencée entre un raccord de pression (17) côté carter ainsi qu'un autre raccord (18) côté carter, et l'autre raccord (18) est susceptible d'être relié au raccord d'entrée (7) de l'agencement de tiroir rotatif (4, 5) via une conduite.

4. Servovalve selon l'une des revendications 1 à 3, **caractérisée en ce qu'**il est prévu entre une partie (11) appuyée axialement fermement sur le carter et accouplée solidairement en rotation à la douille de tiroir (5), et le manchon de tiroir (12) mobile en translation axiale sur le tiroir rotatif (4) et serré axialement contre ladite partie (11) par une force de positionnement (13), des corps de roulement ou des billes (14) qui sont reçu(e)s sur les faces frontales tournées l'une vers l'autre de ladite partie (11) ainsi que du manchon de tiroir (12) dans des logements en forme de gorge comportant des flancs orientés radialement à l'axe du tiroir rotatif (4) et de la douille de tiroir (5) et formant un profil en V.

5. Servovalve selon la revendication 4, **caractérisée en ce que** le manchon de tiroir (12) est serré contre la partie (11) axialement fixe au moyen d'un ressort de compression hélicoïdal (13) qui entoure coaxialement le tiroir rotatif (4).
